# EUROPEAN PATENT SPECIFICATION

(11) **EP 0 846 053 B1**
(45) Date of publication and mention of the grant of the patent: **30.05.2001**
(21) Application number: 96928527.9
(22) Date of filing: 22.08.1996
(51) Int. Cl.: B29C 53/08, B29C 53/84

(54) **TUBE BENDING**
VERFAHREN ZUM BIEGEN EINES ROHRES
CINTRAGE D'UN TUBE

(30) Priority: 24.08.1995 GB 9518171
(43) Date of publication of application: 10.06.1998
(73) Proprietor: BUNDY INTERNATIONAL LTD., Abingdon, Oxfordshire OX14 1UH (GB)
(72) Inventor: TACK, Eric, B-3700 Tongeren (BE); VANGEEL, Jean, B-3580 Beringen (BE); REYMEN, Hugo, B-3580 Beringen (BE)
(74) Representative: Masch, Karl Gerhard, Dr.
(86) International application number: GB9602038
(87) International publication number: WO9707969

(56) References cited:
- EP-A- 0 089 201
- EP-A- 0 486 237
- US-A- 2 571 416
- US-A- 3 719 737
- US-A- 3 740 991
- US-A- 5 422 048

## Description

The invention relates to a method of providing a bent tube made of a material heatable by a high frequency electric field, including the step of subjecting the tube to the high frequency electric field by means of a pair of spaced apart flat electrodes in the vicinity of the or each bend in the tube and between which said tube extends.

As used herein, the term "tube" includes hoses, pipes and similar conduits, whether of single or multi-layer construction.

Tubes of plastics material are used in a wide number of applications and are commonly used in the automotive field as pipe connections for vapour, vent, hydraulic, fuel, coolant or oil lines. In such applications, the tube is often required to be of a specific shape or configuration.

Previously such shapes or configurations have been obtained by heating a plastic tube, placing it in a bending mould and allowing it to cool in the deformed state. Alternatively, an unheated or warmed tube is placed in a bending mould and is heated, either locally only in the vicinity of the bend or bends or all over (globally), together with the mould, and is then cooled in the mould before being removed. It is important that stresses induced in the tube wall by the bending mould due to the effect of temperature and time relax so that the desired shape is retained after cooling and removal. The following methods for heating are found in practice:
1. Hot air heating (heating local or global).
2. Hot fluids: oils, steam from inside or from outside (heating usually global)
3. Heated and fluidized bed of sand (heating global).
4. Use of heated moulds, e.g. resistance heating, induction heating or with heat transfer media (heating usually local).
5. Irradiation with rays of different wavelengths (heating local or global).

The common objective of all variants is to generate a uniform and as high a temperature as possible (5-15°C below the melting point) in the area of the tube to be bent. In the technical handling of this problem there are also, depending on the characteristics of the heating device, areas with higher and lower temperatures; these anomalies, however, unwanted.

The same is valid for the known method of the kind mentioned initially (US-A-5422048, fig. 12), wherein the two electrodes are disposed in bending dies perpendicularly to the direction of their closing and opening movement.

In another known method for providing a bent tube (US-A-2 571 416, fig. 4) the tube to be bent is heated by fuel-burners such that the parts of the circumferential wall corresponding to the inside and outside of the respective bend of the tube are heated more than the remaining parts of the circumferential wall. Whether the same method is practicable with a high frequency electric field instead of fuel-burners is left open.

It is the object of the present application to provide an improved method of the kind mentioned initially.

According to the present invention the solution of this object is characterised in that said electrodes are energised at high frequencies in the range of 10 to 100 MHz for a period between 6 and 10 seconds and are disposed perpendicularly to the bending axis of the bend or each bend for causing the circumferential wall of the tube to be selectively heated such that the parts of circumferential wall corresponding to the inside and outside of the respective bend of the bent tube are heated more than the remaining parts of the circumferential wall.

In carrying out the invention it may be arranged that the step of causing the circumferential wall of the tube to be selectively heated is carried out before the tube is bent, but advantageously is carried out subsequent to the tube being bent.

A method according to the invention advantageously comprises the subsequent step of cooling the bent tube, said cooling conveniently being effected by a cooling medium applied internally and/or externally to the tube.

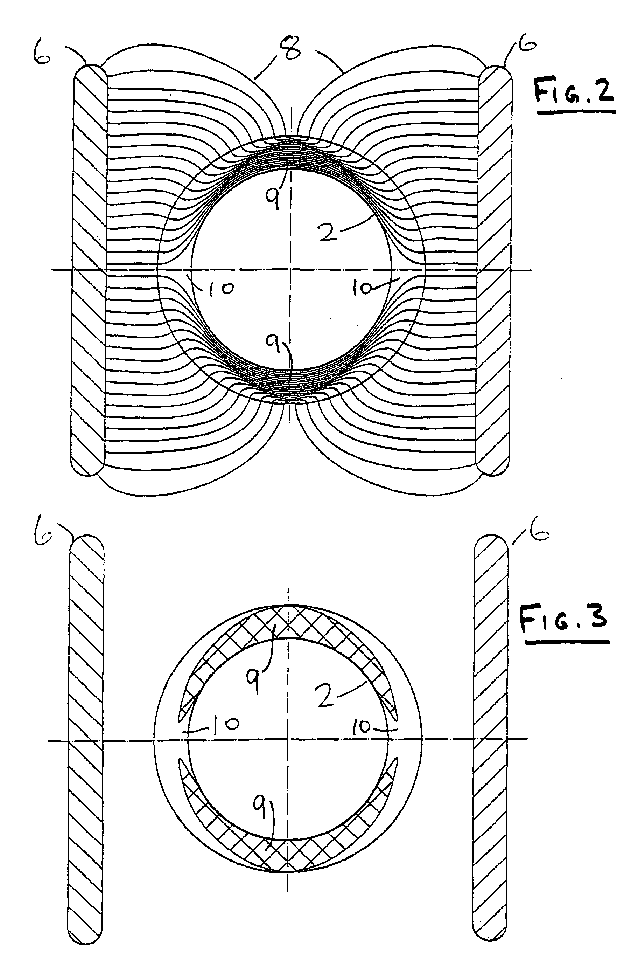

It may be arranged that the tube is made of a thermoplastics material. Alternatively, said tube may be a multi-layer tube which includes at least one layer which may be heated by said high frequency electric field, or it may be made of material which is not heated to any great extent by said high frequency electric field but which includes additional material therein which may be heated by said high frequency electric field to effect said selective heating.
An exemplary embodiment of the invention will now be described, reference being made to the accompanying drawings, in which:
Fig. 1 depicts somewhat diagrammatically apparatus for carrying out a method of making a bent tube in accordance with the present invention, and
Figs. 2 and 3 depict how selective heating of the circumferential wall of the tube of Fig. 1 is effected.
It has been appreciated that in existing methods for producing bent tubes, e.g. of thermoplastics material, large amounts of heat are generated for heating the tube, whether locally or globally, which necessarily requires a high input of power, but which also means that large quantities of heat have to be dissipated when the tube is being cooled which necessarily increases the time necessary to carry out the method.
In the method to be described, heat is generated in a very controlled manner and mainly in those areas of the tube where stresses are induced by the bending process. In this way much less heat is generated making the method much more energy and time efficient.

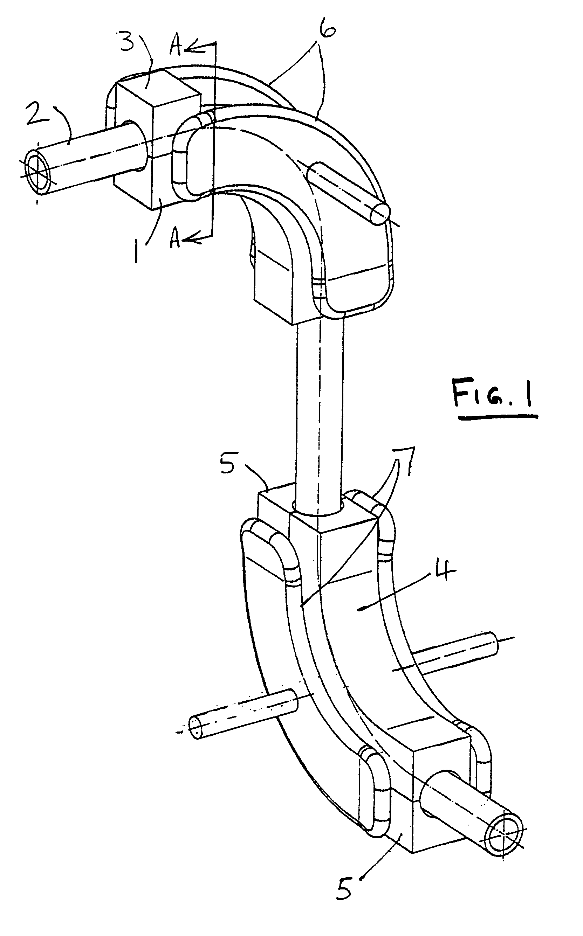

In Fig. 1 of the drawings there is depicted apparatus for producing a bent tube comprising a first curved former 1 around which an unheated tube 2, conveniently of a thermoplastics material, is manually bent, the tube 2 being retained in position by retaining members 3 located at each end of the former 1, only one of which is shown in Fig. 1.
The tube 2 is then manually bent around a second curved former 4 disposed at right angles to the curved former 1, the tube 2 being retained in position by retaining members 5 located at each end of the former 4.
Such an arrangement of formers 1 and 4, when the tube forming method as will be described has been effected, will result in the tube 2 being provided with two right-angle bends, disposed at right angles to one another. It will be appreciated however that such an arrangement is given by way of example only, and suitable formers may be provided to allow the tube 2 to be bent into any required shape or configuration.
Each of the formers 1 and 4 in Fig. 1 is provided with opposed pairs 6 and 7 respectively of electrodes which are secured to the respective former 1,4 so that the tube 2 extends between them. The pairs of electrodes 6 and 7 are shaped to correspond to the bends in the tube 2 and are disposed perpendicularly to the plane of the respective bends in the tube 2 so as to centrally sandwich the bent tube 2 between them.
It has been found that by energising each of the pairs of electrodes 6 and 7 with a short burst, typically of 6 - 10 seconds, of high frequency excitation, selective heating of the circumferential wall of the tube 2 in the vicinity of each of the formers 1 and 4 is effected, sufficient to create a stable bend.
In this specification by high frequency is meant frequencies in the range 10 - 100 MHz, and in practice frequencies of 27.12 MHz and 40.68 MHz have been found to be satisfactory.
The process of selectively heating the circumferential wall of the tube 2 will now be described with reference to Figs. 2 and 3 of the accompanying drawings.
In Fig. 2 of the drawings there is depicted, somewhat diagrammatically, a cross-sectional view on the lines A-A in Fig. 1 with the former 1 removed.
Thus in Fig. 2, a cross-sectional view of the tube 2 is shown centrally disposed between the pair of electrodes 6.
When the electrodes 6 are excited with a high frequency signal, because the relative permittivity of the tube material is greater than that of air (or of a vacuum), the tube 2 positioned between the electrodes 6 causes the lines of electric field 8 between the electrodes 6 to be distorted. This distortion of the electric field causes the flux density in the circumferential wall of the tube 2 to vary, and as the heating affect of the high frequency excitation is proportional to the flux density, those parts 9 of the circumferential wall of the tube 2 furthest from the electrodes 6 have the greatest flux density and so are heated more than those parts 10 of the circumferential wall which have lower flux density.
Accordingly it is arranged that those parts 9 of the circumferential wall of the tube 2, as depicted in Fig. 3, correspond to those parts of the tube 2 which constitute the inside and outside bends of the tube 2 where the greatest tensile and compressive stress takes place and where the greatest heating is required.
Thus, it will be appreciated that the use of such selective heating enables the heat to be directed in the main only to those parts of the tube 2 which require to be heated and is thus very heat efficient.
When the tube 2 has been selectively heated as has been described, it may then be cooled in the normal way, by directing a cooling medium e.g. air or other cooling fluid, internally through the tube 2 and/or externally to the outside of the tube 2.
However, it has been found that because of the low temperatures required, and the short time periods involved, sufficient cooling can in some instances be obtained through thermal conduction into unheated parts of the tube 2, and typically cooling down can take place within a period of 3 to 20 seconds.
In the apparatus of Fig. 1, it has been found that the shape of the electrodes 6 and 7 and their spacing is not very critical, but what is important is the position of the electrodes 6 and 7 in relation to the axis of the tube 2. In practice rounded plate electrodes are used which have a width of 0.5 d to 5 d, where d is the diameter of the tube 2, and follow the shape of the bend in the tube 2 in the bend area. The distance of the electrodes 6 and 7 from the surface of the tube 2 is usually between 0 and 30 mm.
The method of bending tubes which has been described is applicable to materials whose relative permittivity is greater than 1, and preferably greater than 2, and whose dissipation factor is greater that 0.01, and preferably greater than 0.03. This condition is met with most tube materials such as PA6, PA66, PA11 and PA12. Multi-layered tubes can also be bent without difficulty using this method, if at least one layer in the tube wall consists of a high frequency excitable material. In the case of tubes made of materials where the values of relative permittivity and dissipation factor are too low, this can be remedied by including special additives in the material, such as plasticisers, water, etc., which can be heated by high frequency excitation in order to effect the required selective heating.
The method of providing a bent tube which has been described is advantageous compared with previous methods for the following reasons:
1. The cycle time is shorter by a factor of 3 - 10 with the same quality of bend.
2. Ovalness in the area of the bend even without additional measures such as supporting springs is extremely slight, thereby enabling smaller bending radii.
3. Inexpensive bending moulds in plastic, such as PE or PTFE can be used.
4. The bending process can be easily automated, because only low temperatures occur in the area of the bending zone and the electrodes necessary for building up the high frequency field take up only little space.
5. Energy consumption is very low.

## Claims

1. A method of providing a bent tube (2) made of a material heatable by a high frequency electric field (8), including the step of subjecting the tube (2) to the high frequency electric field (8) by means of a pair of spaced apart flat electrodes (6, 7) in the vicinity of the or each bend in the tube (2) and between which said tube (2) extends, characterised in that said electrodes (6, 7) are energised at high frequencies in the range of 10 to 100 MHz for a period between 6 and 10 seconds and are disposed perpendiculary to the bending axis of the bend or each bend for causing the circumferential wall of the tube (2) to be selectively heated such that the parts (9) of the circumferential wall corresponding to the inside and outside of the respective bend of the bent tube (2) are heated more than the remaining parts (10) of the circumferential wall.

2. A method as claimed in claim 1, characterised in that the step of causing the circumferential wall of the tube (2) to be selectively heated is carried out before the tube (2) is bent.

3. A method as claimed in claim 1, characterised in that the step of causing the circumferential wall of the tube (2) to be selectively heated is carried out subsequent to the tube (2) being bent.

4. A method as claimed in any preceding claim, characterised by the subsequent step of cooling the bent tube (2).

5. A method as claimed in claim 4, characterised in that said cooling is effected by a cooling medium applied internally and/or externally to the tube (2).

6. A method as claimed in any preceding claim, characterised in that the tube is made of a thermoplastics material.

7. A method as claimed in any of claims 1 to 6, characterised in that said tube (2) is a multi-layer tube, and includes at least one layer which may be heated by said high frequency electric field (8).

8. A method as claimed in any of claims 1 to 6, characterised in that said tube (2) is made of a material which includes additional material therein which may be heated by said high frequency electric field (8) to effect said selective heating.

## Patentansprüche

1. Verfahren zur Bereitstellung eines gebogenen Rohrs (2) aus einem Material, das von einem elektrischen Hochfrequenzfeld (8) erwärmt werden kann, umfassend den Schritt, in dem das Rohr (2) dem elektrischen Hochfrequenzfeld (8) ausgesetzt wird, mit Hilfe eines Paares von mit einem Abstand zueinander angeordneten flachen Elektroden (6, 7) in der Umgebung der oder jeder Biegung in dem Rohr (2), und zwischen denen das genannte Rohr (2) verläuft, dadurch gekennzeichnet, daß die genannten Elektroden (6, 7) über einen Zeitraum von 6 bis 10 Sekunden mit hohen Frequenzen im Bereich von 10 bis 100 MHz erregt werden und senkrecht zur Biegeachse der Biegung oder jeder Biegung angeordnet sind, um zu bewirken, daß die Wand des genannten Rohrs (2) am Umfang selektiv erwärmt wird, so daß die Teile (9) der Wand am Umfang, die der Innenseite und der Außenseite der jeweiligen Biegung des gebogenen Rohrs (2) entsprechen, stärker erwärmt werden, als die übrigen Teile (10) der Wand am Umfang.

2. Verfahren nach Anspruch 1, **dadurch gekennzeichnet**, daß der Schritt des selektiven Erwärmens der Wand des Rohrs (2) am Umfang vor dem Biegen des Rohrs (2) ausgeführt wird.

3. Verfahren nach Anspruch 1, **dadurch gekennzeichnet**, daß der Schritt des selektiven Erwärmens der Wand des Rohrs (2) am Umfang nach dem Biegen des Rohrs (2) ausgeführt wird.

4. Verfahren nach einem der vorangehenden Ansprüche, **gekennzeichnet durch** den anschließenden Schritt des Kühlens des gebogenen Rohrs (2).

5. Verfahren nach Anspruch 4, **dadurch gekennzeichnet**, daß die genannte Kühlung durch ein Kühlmedium bewirkt wird, das von innen und/oder von außen auf das Rohr (2) gebracht wird.

6. Verfahren nach einem der vorangehenden Ansprüche, **dadurch gekennzeichnet**, daß das Rohr aus einem thermoplastischem Material gefertigt ist.

7. Verfahren nach einem der Ansprüche 1 bis 6, **dadurch gekennzeichnet**, daß das genannte Rohr (2) ein mehrschichtiges Rohr ist und mindestens eine Schicht umfaßt, die von dem genannten elektrischen Hochfrequenzfeld (8) erwärmt werden kann.

8. Verfahren nach einem der Ansprüche 1 bis 6, **dadurch gekennzeichnet**, daß das genannte Rohr (2) aus einem Material gefertigt ist, in dem sich ein zusätzliches Material befindet, das von dem genannten elektrischen Hochfrequenzfeld (8) erwärmt werden kann, um das genannte selektive Erwärmen zu bewirken.

## Revendications

1. Procédé de réalisation d'un tube cintré (2) constitué d'un matériau apte à être chauffé par un champ électrique haute fréquence (8), comportant l'étape consistant à soumettre le tube (2) au champ électrique haute fréquence (8) par l'intermédiaire de deux électrodes plates écartées (6, 7) disposées au voisinage du coude, ou de chaque coude, du tube (2) et entre lesquelles s'étend ledit tube (2), caractérisé en ce que lesdites électrodes (6, 7) sont excitées à des hautes fréquences comprises entre 10 et 100 MHz pendant une période comprise entre 6 et 10 secondes et sont disposées perpendiculairement à l'axe de pliage du coude ou de chaque coude pour amener la paroi circonférentielle du tube à être chauffée de manière sélective de sorte que les parties (9) de la paroi circonférentielle correspondant à l'intérieur et à l'extérieur du coude respectif du tube cintré (2) sont plus chauffées que les parties restantes (10) de la paroi circonférentielle.

2. Procédé selon la revendication 1, caractérisé en ce que l'étape consistant à amener la paroi circonférentielle du tube (2) à être chauffée de manière sélective est exécutée avant que le tube (2) ne soit cintré.

3. Procédé selon la revendication 1, caractérisé en ce que l'étape consistant à amener la paroi circonférentielle du tube (2) à être chauffée de manière sélective est exécutée après que le tube (2) ait été cintré.

4. Procédé selon l'une quelconque des revendications précédentes, caractérisé en ce qu'il comporte l'étape ultérieure consistant à refroidir le tube cintré (2).

5. Procédé selon la revendication 4, caractérisé en ce que ledit refroidissement est effectué par un agent de refroidissement appliqué à l'intérieur et/ou à l'extérieur du tube (2).

6. Procédé selon l'une quelconque des revendications précédentes, caractérisé en ce que le tube est constitué d'une matière thermoplastique.

7. Procédé selon l'une quelconque des revendications 1 à 6, caractérisé en ce que ledit tube (2) est un tube multicouche, et comporte au moins une couche qui peut être chauffée par ledit champ électrique haute fréquence (8).

8. Procédé selon l'une quelconque des revendications 1 à 6, caractérisé en ce que ledit tube (2) est constitué d'un matériau qui comporte un matériau supplémentaire situé dans celui-ci, qui peut être chauffé par ledit champ électrique haute fréquence (8) pour effectuer ledit chauffage sélectif.
